# EUROPEAN PATENT APPLICATION

(11) **EP 4 518 073 A1**
(43) Date of publication of application: **05.03.2025**
(21) Application number: 24189720.6
(22) Date of filing: 19.07.2024
(51) Int. Cl.: H02J 3/32, H01M 10/613, H02J 7/00

(54) **BOOST AND CONVERSION COMPARTMENT, AND IMMERSION LIQUID-COOLED ENERGY STORAGE SYSTEM HAVING THE SAME**

(30) Priority: 31.08.2023 CN 202311111634
(71) Applicant: CSG Power Generation (Guangdong) Energy Storage Technology Co., Ltd, Guangzhou, Guangdong 510635 (CN)
(72) Inventor: WANG, Zhiqiang, Guangzhou, Guangdong, 510635 (CN); LIU, Bangjin, Guangzhou, Guangdong, 510635 (CN); DONG, Chao, Guangzhou, Guangdong, 510635 (CN); WAN, Sheng, Guangzhou, Guangdong, 510635 (CN); WANG, Jin, Guangzhou, Guangdong, 510635 (CN); XIAO, Di, Guangzhou, Guangdong, 510635 (CN); WU, Jiasheng, Guangzhou, Guangdong, 510635 (CN); ZHOU, Yueli, Guangzhou, Guangdong, 510635 (CN); CHEN, Man, Guangzhou, Guangdong, 510635 (CN); PENG, Yumin, Guangzhou, Guangdong, 510635 (CN); WU, Bin, Guangzhou, Guangdong, 510635 (CN); ZHANG, Min, Guangzhou, Guangdong, 510635 (CN); ZHENG, Xiaodong, Guangzhou, Guangdong, 510635 (CN); LIN, Qihua, Guangzhou, Guangdong, 510635 (CN); WENG, Zheng, Guangzhou, Guangdong, 510635 (CN); WANG, Linwei, Guangzhou, Guangdong, 510635 (CN); TANG, Kejian, Guangzhou, Guangdong, 510635 (CN); PENG, Cheng, Guangzhou, Guangdong, 510635 (CN); ZHAO, Shaohua, Guangzhou, Guangdong, 510635 (CN); ZOU, Lunsen, Guangzhou, Guangdong, 510635 (CN)
(74) Representative: Murgitroyd & Company

(57) **Abstract**

A boost and conversion compartment applied to an immersion liquid-cooled energy storage system is disclosed. The immersion liquid-cooled energy storage system includes a liquid-cooled battery compartment connected to the boost and conversion compartment. The liquid-cooled battery compartment including a battery system and combiner boxes. The boost and conversion compartment includes a high-voltage cabinet, a transformer and a power conversion system. The power conversion system including a plurality of string-type power conversion units. Each string-type power conversion unit has a first end connected to the transformer through an alternating-current circuit breaker, and a second end connected to one of a plurality of battery clusters of the battery system through one of the combiner boxes. The boost and conversion compartment, which serves as a primary system of the immersion liquid-cooled energy storage system, can significantly improve efficiency and system availability of the primary system of the immersion liquid-cooled energy storage system.

## Description

### TECHNICAL FIELD

The present disclosure relates to the field of liquid-cooled energy storage technologies, and in particular, to a boost and conversion compartment and an immersion liquid-cooled energy storage system having the same.

### BACKGROUND

As the core component of the electrochemical energy storage system, the battery has a great risk of thermal runaway. Thermal runaway caused by mechanical abuse, electrical abuse, and thermal abuse is the root cause of safety accidents such as fire or explosion in battery energy storage power stations. From a safety perspective, thermal management of energy storage systems is extremely important. The inherent safety of battery energy storage has become one of the key factors restricting the large-scale application of battery energy storage systems. During the operation of air-cooled and plate type liquid-cooled battery energy storage power stations, there are safety risks such as uneven heat dissipation and leakage of ethylene glycol due to failure of liquid cooling plates, pipes, or joints, and the temperature consistency of batteries in different areas cannot be guaranteed.

Based on the heat dissipation requirements of application scenarios of electrochemical energy storage power stations, compared with air cooling and cold plate indirect liquid cooling, immersion liquid cooling thermal management has significant advantages and can quickly improve the cooling performance, safety performance and operating efficiency of the energy storage system. However, the current immersion liquid-cooled energy storage system is still in an exploratory stage, and the traditional primary system of the immersion liquid-cooled energy storage system has problems of low efficiency and poor system availability.

### SUMMARY

Based on the above, it is necessary to provide a boost and conversion compartment and an immersion liquid-cooled energy storage system having the same, which can improve efficiency and system availability.

A first aspect of the present disclosure provided a boost and conversion compartment applied to an immersion liquid-cooled energy storage system and serving as a primary system of the immersion liquid-cooled energy storage system. The immersion liquid-cooled energy storage system includes a liquid-cooled battery compartment connected to the boost and conversion compartment. The liquid-cooled battery compartment includes a battery system, a first combiner box, and a second combiner box. The battery system includes a liquid-cooled battery cabinet housing a plurality of battery clusters immersed in a cooling fluid. The boost and conversion compartment includes: a high-voltage cabinet provided with a vacuum circuit breaker for connecting a power cable; a transformer connected to the vacuum circuit breaker; a power conversion system (PCS) including a plurality of string-type power conversion units including a first string-type power conversion unit and a second string-type power conversion unit, the first string-type power conversion unit having a first end connected to the transformer through a first alternating-current circuit breaker, and a second end connected to a direct-current side of the battery system through the first combiner box, the second string-type power conversion unit having a first end connected to the transformer through a second alternating-current circuit breaker, and a second end connected to the direct-current side of the battery system through the second combiner box, the second end of the first string-type power conversion unit being connected to one of the plurality of battery clusters, and the second end of the second string-type power conversion unit being connected to another of the plurality of battery clusters; and a PCS group control unit connected to the PCS, and configured to acquire a control instruction and/or state information on the plurality of battery clusters, and control the plurality of string-type power conversion units to charge or discharge the plurality of battery clusters based on the control instruction and/or the state information.

In the first aspect, each of the plurality of string-type power conversion units includes a plurality of power conversion modules, each power conversion module including an alternating-current molded case circuit breaker, a power conversion device and a direct-current molded case circuit breaker connected in sequence. The alternating-current molded case circuit breaker of each of the plurality of power conversion modules of the first string-type power conversion unit is connected to the first alternating-current circuit breaker, and the direct-current molded case circuit breaker of each of the plurality of power conversion modules of the first string-type power conversion unit is connected to the first combiner box. The alternating-current molded case circuit breaker of each of the plurality of power conversion modules of the second string-type power conversion unit is connected to the second alternating-current circuit breaker, and the direct-current molded case circuit breaker of each of the plurality of power conversion modules of the second string-type power conversion unit is connected to the second combiner box.

In the first aspect, the power conversion device includes an alternating-current filter, a bidirectional DC/AC converter and a direct-current filter connected in sequence. The alternating-current filter is connected to the alternating-current molded case circuit breaker, and the direct-current filter is connected to the direct-current molded case circuit breaker.

In the first aspect, the alternating-current filter is an alternating-current electromagnetic interference filter, and the direct-current filter is a direct-current electromagnetic interference filter.

In the first aspect, the power conversion device further includes an alternating-current surge protection device, an alternating-current relay unit, an LCL filter, a direct-current contactor, a soft start circuit, and a direct-current surge protection device. An end of the alternating-current surge protection device is connected between the alternating-current filter and the alternating-current molded case circuit breaker, and another end of the alternating-current surge protection device is grounded. An end of the alternating-current relay unit is connected to the alternating-current filter, and another end of the alternating-current relay unit is connected to the bidirectional DC/AC converter through the LCL filter. The soft start circuit is connected in parallel with the direct-current contactor between a first end of the direct-current contactor and a second end of the direct-current contactor, the first end of the direct-current contactor is connected to the bidirectional DC/AC converter, and the second end of the direct-current contactor is connected to the direct-current filter. An end of the direct-current surge protection device is connected between the direct-current filter and the direct-current molded case circuit breaker, and another end of the direct-current surge protection device is grounded.

In the first aspect, the first combiner box includes a plurality of first high-voltage boxes, each of the plurality of first high-voltage boxes being connected to the direct-current molded case circuit breaker in one of the plurality of power conversion modules of the first string-type power conversion unit in a one-to-one correspondence. The second combiner box includes a plurality of second high-voltage boxes, each of the plurality of second high-voltage boxes being connected to the direct-current molded case circuit breaker in one of the plurality of power conversion modules of the second string-type power conversion unit in a one-to-one correspondence.

In the first aspect, the vacuum circuit breaker is a combined vacuum circuit breaker, and the boost and conversion compartment further includes lightning arresters respectively connected to the combined vacuum circuit breaker, the first alternating-current circuit breaker, and the second alternating-current circuit breaker.

In the first aspect, the boost and conversion compartment further includes three high-voltage current transformers. Two of the three high-voltage current transformers are connected between the vacuum circuit breaker and the transformer, and the transformer is connected to the first alternating-current circuit breaker and the second alternating-current circuit breaker through the remaining one of the three high-voltage current transformers.

In the first aspect, the boost and conversion compartment further includes an energy management unit configured to manage an auxiliary power system for the immersion liquid-cooled energy storage system. An end of the energy management unit is connected to the transformer, and another end of the energy management unit is connected to a device power supply. The device power supply includes at least a power supply for the string-type power conversion unit. The energy management unit includes a fused disconnect switch, an isolation transformer, a relay, and a circuit breaker assembly connected in sequence. The fused disconnect switch is connected to the transformer, and the circuit breaker assembly is connected to the device power supply.

In the first aspect, the transformer is an insulated stereo roll iron core transformer.

A second aspect of the present disclosure provides an immersion liquid-cooled energy storage system. The immersion liquid-cooled energy storage system includes a liquid-cooled battery compartment and the boost and conversion compartment of the first aspect. The liquid-cooled battery compartment includes a battery system, a first combiner box and a second combiner box. The battery system includes a liquid-cooled battery cabinet housing a plurality of battery clusters immersed in a cooling fluid. The power conversion system of the boost and conversion compartment is connected to a direct-current side of the battery system through the first combiner box and the second combiner box.

In the second aspect, the battery cluster includes a plurality of battery modules, and the battery module includes a plurality of battery cells grouped in a cluster.

In the second aspect, the liquid-cooled battery compartment further includes a battery management system communicating with the power conversion system. The battery management system is configured to acquire state information on the plurality of battery clusters and transmit the state information to the power conversion system.

According to the boost and conversion compartment in the first aspect, since the string-type power conversion units cooperating with the transformer and the high-voltage cabinet are connected to the direct-current side of the battery system, the boost and conversion compartment has power grid adaptability, and can be applied to the immersion liquid-cooled energy storage system to significantly improve efficiency and system availability of the primary system of the immersion liquid-cooled energy storage system, thereby implementing free circulating current.

### BRIEF DESCRIPTION OF THE DRAWINGS

The accompanying drawings, which are incorporated, in and, constitute a part of the specification, illustrate one or more embodiments and, together with the description, explain these embodiments.
FIG. 1 is a schematic diagram illustrating a boost and conversion compartment according to an embodiment of the present disclosure.
FIG. 2 is a schematic diagram illustrating a vacuum circuit breaker in FIG. 1 according to an embodiment of the present disclosure.
FIG. 3 is a schematic diagram illustrating a power conversion unit in FIG. 1 according to an embodiment of the present disclosure.
FIG. 4 is a schematic diagram illustrating a power conversion device according to an embodiment of the present disclosure.
FIG. 5 is a schematic diagram illustrating a circuit configuration of the power conversion device according to an embodiment of the present disclosure.
FIG. 6 is a schematic diagram illustrating an energy management unit according to an embodiment of the present disclosure.

### DETAILED DESCRIPTION OF THE EMBODIMENTS

In order to make the above objectives, features and advantages of the present disclosure more obvious and understandable, specific implementations of the present disclosure are described in detail below with reference to the accompanying drawings. In the following description, many specific details are set forth in order to fully understand the present disclosure. However, the present disclosure can be implemented in many other ways different from those described herein, and those of ordinary skill in the art can make similar improvements without departing from the connotation of the present disclosure. Therefore, the present disclosure is not limited by the specific embodiments disclosed below.

Unless otherwise defined, all technical and scientific terms used herein have the same meaning as those commonly understood by those skilled in the art to which the present disclosure belongs. The terms used herein in the specification of the present disclosure are only for the purpose of describing specific embodiments and are not intended to limit the present disclosure.

In the present disclosure, unless otherwise clearly specified and limited, the terms "first" and "second" are used for descriptive purposes only, and cannot be interpreted as indicating or implying relative importance or implicitly specifying the quantity of indicated technical features. Thus, the features defined as "first" and "second" may explicitly or implicitly include at least one of these features. For example, a first alternating-current circuit breaker may be referred to as a second alternating-current circuit breaker, and similarly, a second alternating-current circuit breaker may be referred to as a first alternating-current circuit breaker. Both the first alternating-current circuit breaker and the second alternating-current circuit breaker are alternating-current circuit breakers, but they are not the same alternating-current circuit breaker.

It will be understood that, when a feature or element is referred to as being "connected", "attached" or "coupled" to another feature or element, it can be directly connected, attached or coupled to the other feature or element or intervening features or elements may be present. In contrast, when a feature or element is referred to as being "directly connected", "directly attached" or "directly coupled" to another feature or element, there are no intervening features or elements present. Although described or shown with respect to one embodiment, the features and elements so described or shown can apply to other embodiments.

Terminology used herein is for the purpose of describing particular embodiments only and is not intended to be limiting of the present disclosure. For example, as used herein, the singular forms "a", "an" and "the" are intended to include the plural forms as well, unless the context clearly indicates otherwise. As used herein, the term "plurality" means at least two, such as two, three, etc., unless otherwise clearly and specifically defined. It will be further understood that the terms "includes" and/or "including," when used in this specification, specify the presence of stated features, steps, operations, elements, and/or components, but do not preclude the presence or addition of one or more other features, steps, operations, elements, components, and/or groups thereof. As used herein, the term "and/or" includes any and all combinations of one or more of the associated listed items and may be abbreviated as "/".

The immersion liquid-cooled energy storage system, such as a full immersion type liquid-cooled battery energy storage system, has a wide range of applications. The battery energy storage system based on immersion cooling technologies has many advantages such as good safety performance, high energy density, good thermal management effect, and strong environmental adaptability. The immersion liquid-cooled energy storage system can be applied to various application scenarios such as new energy storage power station, thermal power plant combined storage power station, grid-side independent energy storage power station, user-side industrial and commercial energy storage power station, data room emergency standby power, and emergency repair and rescue. Furthermore, the application prospect of the immersion liquid-cooled energy storage system is good. The research results of the immersion liquid-cooled energy storage system can provide technical support for the design, construction or operation of battery energy storage power stations. In addition, it can be promoted and applied to lithium-ion battery application fields such as new energy vehicles, two-wheeled electric vehicles, mobile energy storage, and cascade utilization. Through the construction of a new power system, efficient consumption of new energy and transformation of energy structure can be achieved.

In embodiments of the present disclosure, the immersion liquid-cooled energy storage system may include a boost and conversion compartment and an immersion liquid-cooled battery compartment. The immersion liquid-cooled battery compartment may include a battery system, a battery management system (BMS), a fire-fighting system, a liquid cooling unit, a combiner box, a liquid cooling pipeline, a base, etc. Through full immersion thermal management, a full immersion design is adopted for the battery cluster, which has many advantages such as good safety performance, high energy density, good thermal management effect, and strong environmental adaptability. Further, the boost and conversion compartment may include a high-voltage ring main unit (referred to as high-voltage cabinet), a transformer, a power conversion system (PCS), an energy management unit, etc. Exemplarily, a 1500V string-type converter may be applied in the boost and conversion compartment. The boost and conversion compartment, which serves as a primary system of the immersion liquid-cooled energy storage system, can use 10kV string-type power conversion units. These string-type power conversion units are connected to a power cable through a transformer and a high-voltage cabinet in sequence. The boost and conversion compartment can improve efficiency and system availability of the primary system of the immersion liquid-cooled energy storage system, and has many advantages such as free circulating current, high efficiency, and high system availability.

In embodiments of the present disclosure, the power conversion system, which is connected between the battery system and the power cable, can realize bidirectional conversion of electric energy, can control the charging and discharging process of the battery cluster, perform AC to DC or DC to AC conversion, and run in grid connection after receiving a start command. In a standby state, the power conversion system only locks the pulse and is in hot standby state. When receiving a standby instruction or a dispatch command, the power conversion system can quickly enter a corresponding state.

Exemplarily, in embodiments of the present disclosure, based on the string-type power conversion units, the boost and conversion compartment includes a PCS group control unit configured to check relevant constant settings of the PCS, including control modes and related parameters, to ensure that the communication between the PCS and the BMS is normal. The PCS group control unit is configured to acquire a control instruction and/or state information on the battery clusters, and control the string-type power conversion units to charge or discharge the battery clusters based on the control instruction and/or the state information. For example, the PCS group control unit can receive background control instructions through communication, and control the PCS to charge or discharge the battery clusters based on power information included in the control instructions, so as to adjust the active power and reactive power of the power grid. In addition, the PCS can communicate with the BMS through a controller area network (CAN) interface or other means to obtain the state information on the battery clusters, and then control the PCS to implement protective charging or discharging of the battery clusters in the immersion liquid-cooled energy storage system, to ensure safe operation of the battery system, and make the power quality and grid adaptability of the boost and conversion compartment meet the requirements.

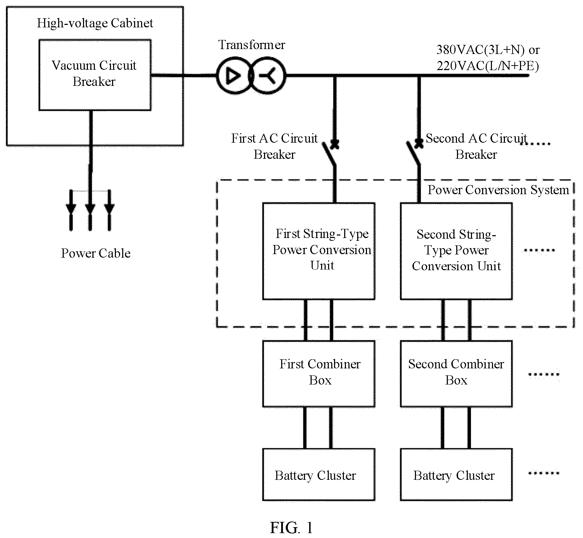

As shown in FIG. 1, a boost and conversion compartment applied to an immersion liquid-cooled energy storage system is provided. The boost and conversion compartment serves as a primary system of the immersion liquid-cooled energy storage system. The immersion liquid-cooled energy storage system includes the boost and conversion compartment, and a liquid-cooled battery compartment connected to the boost and conversion compartment. The liquid-cooled battery compartment includes a battery system, a first combiner box, and a second combiner box. The battery system includes a liquid-cooled battery cabinet housing a plurality of battery clusters immersed in a cooling fluid. The boost and conversion compartment may include a high-voltage cabinet, a transformer, a power conversion system (PCS) and a PCS group control unit (not shown). The high-voltage cabinet is provided with a vacuum circuit breaker for connecting a power cable. The transformer is connected to the vacuum circuit breaker. The PCS includes a plurality of string-type power conversion units including a first string-type power conversion unit and a second string-type power conversion unit. The first string-type power conversion unit has a first end connected to the transformer through a first alternating-current circuit breaker, and a second end connected to a direct-current side of the battery system through the first combiner box. The second string-type power conversion unit has a first end connected to the transformer through a second alternating-current circuit breaker, and a second end connected to the direct-current side of the battery system through the second combiner box. The second end of the first string-type power conversion unit is connected to one of the plurality of battery clusters, and the second end of the second string-type power conversion unit is connected to another of the plurality of battery clusters.

In this embodiment, the vacuum circuit breaker for connecting the power cable is arranged in the high-voltage cabinet. Exemplarily, the power cable may be a copper core power cable, such as a ZA-YJV22 cable. Optionally, a rated working voltage of the power cable may be 8.7/15 KV, which is not limited in the embodiment of the present disclosure.

The transformer may refer to a device that uses the principle of electromagnetic induction to change the alternating-current voltage, and its main functions include voltage conversion, current conversion, impedance conversion, isolation, voltage stabilization (magnetic saturation transformer), etc. For example, the transformer may include an iron core (or magnetic core) and a coil, and the coil has two or more windings. One of the windings connected to an alternating-current power supply is called a primary coil (or primary side coil or primary coil), and the remaining windings are called secondary coils (or secondary side coils or auxiliary coils). The transformer may be an iron core transformer formed by an iron core made of a soft magnetic material, a primary coil L1 and a secondary coil L2 with different numbers of turns arranged on the iron core. When the primary coil L1 of the transformer is connected to the alternating-current power supply, an alternating magnetic flux is generated in the iron core, and the alternating magnetic flux induces an alternating current on the secondary coil L2.

Exemplarily, as shown in FIG. 1, there may be at least two alternating-current circuit breakers (for example, a first alternating-current circuit breaker and a second alternating-current circuit breaker, which are only schematic illustrations) between the PCS and the transformer. Optionally, there may be at least two string-type power conversion units (for example, a first string-type power conversion unit and a second string-type power conversion unit, which are only schematic illustrations). Furthermore, there may be at least two combiner boxes (for example, a first combiner box and a second combiner box, which are only schematic illustrations). There may also be at least two battery clusters. It can be understood that there may be more than two alternating-current circuit breakers, string-type power conversion units, two combiner boxes, and two battery clusters, which is not limited herein.

Component of the immersion liquid-cooled energy storage system may be powered by an auxiliary power system. The auxiliary power system includes a three-phase input of 380 VAC (3L+N) or a single-phase input of 220 VAC (L/N+PE). As shown in FIG. 1, the immersion liquid-cooled energy storage system may be connected to the three-phase input of 3 80 VAC (3L+N) or the single-phase input of 220 VAC (L/N+PE). When the single input is applied, the single input is connected to a corresponding terminal block, for example, 1# terminal is connected to A/N, 2# terminal is connected to B, 3# terminal is connected to C/N, 4# terminal is connected to AN, etc. Exemplarily, the energy management unit may be connected to the three-phase input of 380 VAC (3L+N) or the single-phase input of 220 VAC (L/N+PE). The energy management unit is configured to manage the auxiliary power system. It should be noted that "L", "N" and "PE" represent a live wire, a neutral wire and a grounded wire respectively.

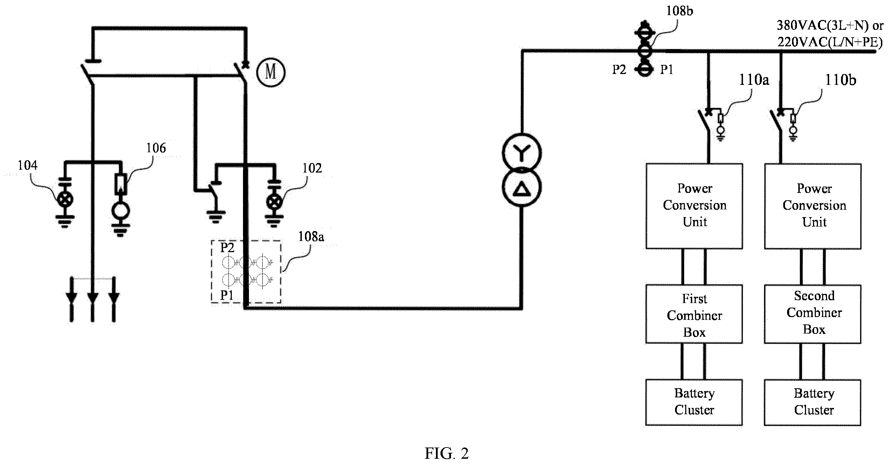

Further, the vacuum circuit breaker may be a combined vacuum circuit breaker. As shown in FIG. 2, the combined vacuum circuit breaker M used as the vacuum circuit breaker is electric in AC 220V Exemplarily, as shown in FIG. 2, the boost and conversion compartment may further include an indicator lamp 102 and an indicator lamp 104 connected to the combined vacuum circuit breaker, and a lightning arrester 106 connected to the combined vacuum circuit breaker. It should be noted that the power conversion units in FIG. 2 refers to string-type power conversion units. It can be understood that the power conversion unit is used as an abbreviation for the string-type power conversion unit in the embodiments of the present disclosure.

The indicator lamp can be a lighting lamp, such as a light emitting diode (LED). In the embodiments of the present disclosure, the indicator lamp can indicate an operating state of the circuit (for example, powered or not), an operating state of the electrical device (for example, being operating, stopped or tested) and a position state (for example, connected or disconnected), etc. Optionally, by turning on and off the indicator lamps of different colors, the operating state of the power supply (for example, power-on state or power-off state) and the operating state of the system (for example, standby state, in-operation state, or operation failure) of the boost and conversion compartment can be accurately confirmed, and then the connection between the PCS and the power grid can be immediately disconnected when the system operates abnormally, to protect the safety of the PCS. For example, if the "standby" or "in- operation" lamp is not on for more than a preset time, it means that the boost and conversion compartment is abnormally started and needs to be powered off and powered on again.

Exemplarily, as shown in FIG. 2, the boost and conversion compartment may further include three high-voltage current transformers. Two high-voltage current transformers 108a are connected between the vacuum circuit breaker and the transformer, and the transformer is connected to the first alternating-current circuit breaker and the second alternating-current circuit breaker through one high-voltage current transformer 108b. Optionally, as shown in FIG. 2, the boost and conversion compartment may further include a lightning arrester 110a connected to the second alternating-current circuit breaker, and a lightning arrester 110b connected to the first alternating-current circuit breaker.

In this embodiment, the high-voltage cabinet includes the circuit breakers, the lightning arresters, the high-voltage current transformer and the indicator lamps, which can cooperation with each other and timely feedback the operating state of the boost and conversion compartment, thereby adapting to the operation mode of the immersion liquid-cooled energy storage system and improving the efficiency and system availability of the primary system of the immersion liquid-cooled energy storage system.

As an example, in this embodiment, the transformer may be an outdoor box-type transformer, and specifically, an insulated stereo roll iron core transformer. Furthermore, the transformer may further include a temperature controller and a fan. It can be understood that the above-mentioned high-voltage cabinet, circuit breaker, transformer and power conversion system may also be in other forms, but not limited to the forms mentioned in the above embodiments, as long as they can achieve the corresponding functions.

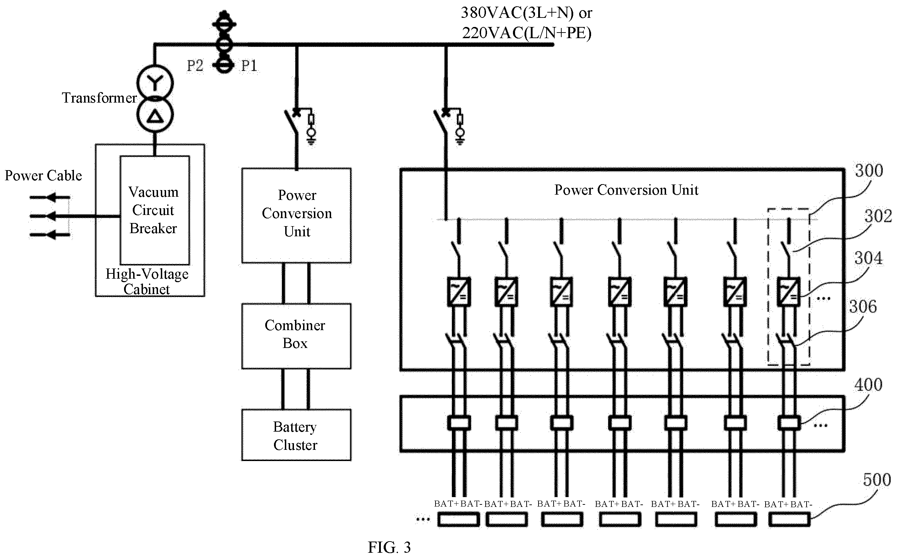

As shown in FIG. 3, in an embodiment, the power conversion unit may include a plurality of power conversion modules 300, and each power conversion module 300 may include an alternating-current molded case circuit breaker 302, a power conversion device 304 and a direct-current molded case circuit breaker 306 connected in sequence.

The alternating-current molded case circuit breaker 302 of each of the plurality of power conversion modules 300 of the first string-type power conversion unit is connected to the first alternating-current circuit breaker, and the direct-current molded case circuit breaker 306 of each of the plurality of power conversion modules 300 of the first string-type power conversion unit is connected to the first combiner box. The alternating-current molded case circuit breaker 302 of each of the plurality of power conversion modules 300 of the second string-type power conversion unit is connected to the second alternating-current circuit breaker, and the direct-current molded case circuit breaker 306 of each of the plurality of power conversion modules 300 of the second string-type power conversion unit is connected to the second combiner box.

Specifically, as shown in FIG. 3, taking one of the plurality of power conversion modules 300 of the second string-type power conversion unit as an example, the power conversion module 300 includes the alternating-current molded case circuit breaker 302, the power conversion device 304 and the direct-current molded case circuit breaker 306 connected in sequence. The alternating-current molded case circuit breaker 302 is connected to the alternating-current circuit breaker, and the direct-current molded case circuit breaker 306 is connected to the combiner box.

In this embodiment, the PCS includes, for example, two string-type power conversion units, i.e., the first string-type power conversion unit and the second string-type power conversion unit. Each string-type power conversion unit includes, for example, seven power conversion modules. In this case, the boost and conversion compartment of the immersion liquid-cooled energy storage system may include one combined vacuum circuit breaker, one outdoor box-type transformer, and fourteen power conversion devices.

In this embodiment, each power conversion unit corresponds to seven battery clusters 500. Exemplarily, the liquid-cooled battery compartment of the immersion liquid-cooled energy storage system may include fourteen battery clusters 500. Each battery cluster 500 may include, for example, sixteen battery modules (i.e., battery packs), and each battery module may include a plurality of battery cells, for example, twenty-six battery cells. The direct-current side of the battery system is connected to the power conversion unit through the combiner box. Optionally, the battery cluster may be a lithium iron phosphate (LFT) battery cluster.

Exemplarily, the first combiner box may include a plurality of first high-voltage boxes. The second combiner box may include a plurality of second high-voltage boxes. Each of the plurality of first high-voltage boxes being connected to the direct-current molded case circuit breaker in one of the plurality of power conversion modules of the first string-type power conversion unit in a one-to-one correspondence. Each of the plurality of second high-voltage boxes being connected to the direct-current molded case circuit breaker in one of the plurality of power conversion modules of the second string-type power conversion unit in a one-to-one correspondence. Specifically, as shown in FIG. 3, each of first and second combiner boxes may include seven high-voltage boxes 400. Each high-voltage box 400 is connected to the direct-current molded case circuit breaker 400 in one of the seven conversion modules of the power conversion unit.

In this embodiment, the combiner box may be a direct-current combiner box, which includes a high-voltage box and a wiring harness. Exemplarily, the liquid-cooled battery compartment may include two box-type energy storage battery systems. Each box-type energy storage battery system includes a battery cabinet, an integrated cabinet, a combiner box, and a liquid cooling unit. Optionally, the integrated cabinet includes a communication management unit (EMU) and a fire-fighting system. The EMU may be connected to the power conversion unit, and configured to acquire and transmit data of the BMS, power devices, environment devices, and fire-fighting devices. In this embodiment, the boost and conversion compartment can be adapted to the operation mode of the immersion liquid-cooled energy storage system, and the efficiency and system availability of the primary system of the immersion liquid-cooled energy storage system can be improved.

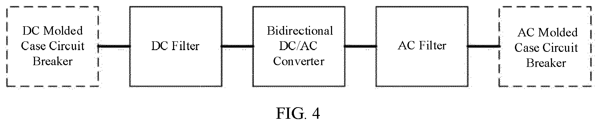

As shown in FIG. 4, in an embodiment, the power conversion device may include an alternating-current filter, a bidirectional DC/AC converter and a direct-current filter connected in sequence. The alternating-current filter is connected to the alternating-current molded case circuit breaker, and the direct-current filter is connected to the direct-current molded case circuit breaker.

Specifically, a main circuit of the power conversion device may include an alternating-current filter, a bidirectional DC/AC converter, and a direct-current filter. Exemplarily, an alternating-current electromagnetic interference (EMI) filter may be adopted as the alternating-current filter, and further, a direct-current EMI filter may further be adopted as the direct-current filter, so that electromagnetic interference, especially electromagnetic interference (noise) in the line, can be suppressed to ensure the operating stability of the power conversion device, and make the power quality and grid adaptability of the boost and conversion compartment meet the requirements.

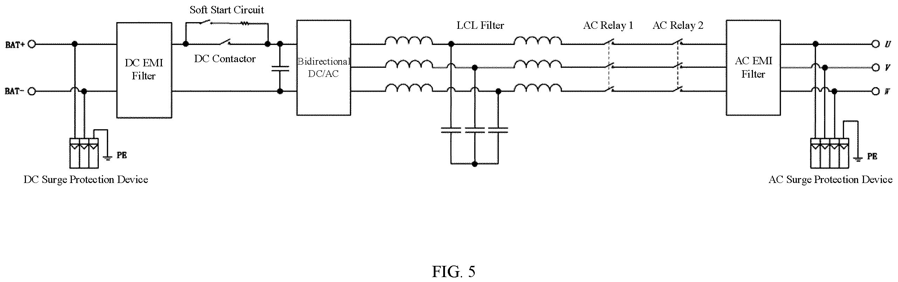

As shown in FIG. 5, the power conversion device may further include an alternating-current surge protection device, an alternating-current relay unit, an LCL filter, a direct-current contactor, a soft start circuit, and a direct-current surge protection device.

An end of the alternating-current surge protection device is connected between the alternating-current filter and the alternating-current molded case circuit breaker, and anther end of the alternating-current surge protection device is grounded. An end of the alternating-current relay unit is connected to the alternating-current filter, and another end of the alternating-current relay unit is connected to the bidirectional DC/AC converter through the LCL filter.

The soft start circuit is connected in parallel with the direct-current contactor between a first end of the direct-current contactor and a second end of the direct-current contactor, the first end of the direct-current contactor is connected to the bidirectional DC/AC converter, and the second end of the direct-current contactor is connected to the direct-current filter. An end of the direct-current surge protection device is connected between the direct-current filter and the direct-current molded case circuit breaker, and another end of the direct-current surge protection device is grounded.

Specifically, the power conversion device may further include an alternating-current surge protection device, an alternating-current relay unit, an LCL filter, a direct-current contactor, a soft start circuit, and a direct-current surge protection device. As shown in FIG. 5, the alternating-current relay unit may include an alternating-current relay 1 and an alternating-current relay 2. The bidirectional DC/AC in FIG. 5 refers to a bidirectional DC/AC converter.

Exemplarily, as shown in FIG. 5, the soft start circuit can be connected in parallel with the direct-current contactor between a first end of the direct-current contactor and a second end of the direct-current contactor, the first end of the direct-current contactor is connected to the bidirectional DC/AC converter, and the second end of the direct-current contactor is connected to the direct-current filter. An end of the direct-current surge protection device is connected between the direct-current filter and the direct-current molded case circuit breaker, and another end of the direct-current surge protection device is grounded.

In an embodiment, the relay may include an electromagnetic system and a contact system. The electromagnetic system includes a coil, a fixed iron core and a movable armature, and the contact system includes a movable contact and a static contact. When the input of the coil of the electromagnetic system of the relay reaches a predetermined threshold, the iron core generates a magnetic force under electromagnetic action, to attract the armature. The armature drives the movable contact of the contact system to move, to connect or disconnect the contact, thereby changing an on-off state of a circuit connected to the contact system. According to the change in the input of the coil of the electromagnetic system, the on-off state of the contact is controlled. When the input of the coil reaches the predetermined threshold, a normally open contact will be closed and the normally closed contact will be open, thereby changing the operating state of the circuit connected to the contact.

The power conversion device with the above-mentioned main circuit structure can be configured to perform the following operations: before the power conversion device is powered on, confirm that a direct-current switch at a front stage of the power conversion device is in the disconnected position, confirm that the circuit breaker of the alternating-current distribution cabinet connected to the alternating-current side of the power conversion device is in the disconnected state, and then measure the voltage and frequency of the grid access point before connecting to the grid to ensure that grid connection specifications of the power conversion device meet the requirements.

After the above conditions are met, the power conversion system can be turned on according to the following steps: a. closing the circuit breaker on the alternating-current side of the power conversion device; and b. closing the direct-current switch on the direct-current side of the power conversion device; and when the power conversion device is ready (for example, when the LED indicator lamp for the power conversion device is not red), turning the power conversion system on through an EMS background or a host computer. Furthermore, if the LED indicator lamp for the power conversion device is red for a long time, a connection with the power conversion device can be established through the EMS background or other communication methods, to check alarm information of the power conversion device. Optionally, the power conversion device can be turned off through the EMS background or the host computer.

Exemplarily, when replacing or maintaining the power conversion module, the power conversion system may be completely powered off, and operation steps may include: a. performing a shutdown operation; b. confirming that a front-stage switch on the direct-current side of the power conversion device is disconnected; c. confirming that the front-stage switch on the alternating-current side of the power conversion device is disconnected; and d. waiting for a preset time (for example, 15 minutes) to confirm that an internal energy storage device of the power conversion device has been discharged to below a safe voltage.

As described above, by using the power conversion device with the above-mentioned main circuit structure and adopting the corresponding operating process, the boost and conversion compartment can be adapted to the operating mode of the immersion liquid-cooled energy storage system, to improve the efficiency and system availability of the primary system of the immersion liquid-cooled energy storage system.

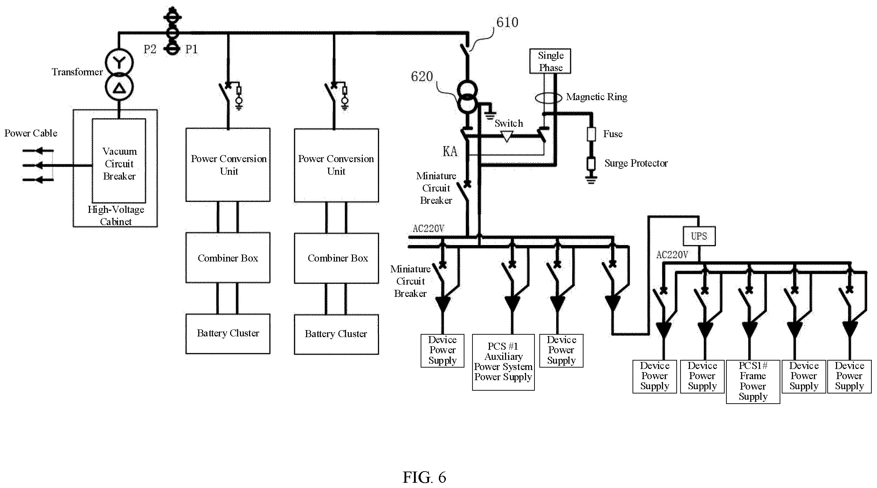

In an embodiment, as shown in FIG. 6, the boost and conversion compartment may further include an energy management unit configured to manage an auxiliary power system for the immersion liquid-cooled energy storage system. An end of the energy management unit is connected to the transformer, and another end of the energy management unit is connected to a device power supply. The device power supply includes at least a power supply for the string-type power conversion unit.

The energy management unit includes a fused disconnect switch 610, an isolation transformer 620, a relay KA and a circuit breaker assembly connected in sequence. The fused disconnect switch is connected to the transformer, and the circuit breaker assembly is connected to the device power supply.

Specifically, in this embodiment, the boost and conversion compartment can be used as a primary system of the immersed liquid cooling energy storage system. A plurality of string-type power conversion units is used in the primary system. The boost and conversion compartment can further include an energy management unit configured to manage the auxiliary power system for the immersion liquid-cooled energy storage system. An end of the energy management unit is connected to the transformer, and another end of the energy management unit is connected to the device power supply. The device power supply includes at least the power supply for the string-type power conversion unit.

The auxiliary power system includes a three-phase input of 380 VAC (3L+N) or a single-phase input of 220 VAC (L/N+PE). When the single input is applied, the single input is connected to a corresponding terminal block, for example, 1# terminal is connected to A/N, 2# terminal is connected to B, 3# terminal is connected to C/N, 4# terminal is connected to AN, etc. Exemplarily, a single-phase isolation transformer can be adopted as the isolation transformer.

As shown in FIG. 6, the circuit breaker assembly may include a plurality of miniature circuit breakers. Exemplarily, the energy management unit may further include devices such as a transfer-switch, a magnetic ring, a fuse, and a surge protector. The device power supply includes at least the power supply for the string-type power conversion unit. Optionally, the device power supply may include a PCS #1 station power supply and a PCS1# frame power supply. Exemplarily, the device power supply may further include at least one of a container fan/heater power supply, a dry-type cooling fan power supply, a lighting and wall plug power supply, a high-voltage room lighting/heating power supply, a maintenance socket power supply, a backup fan power supply, or a UPS power supply.

Exemplarily, the device power supply may further include at least one of a transformer measurement and control/temperature control power supply, an EMU/switch coordination controller power supply, a fire protection power supply, a wireless temperature measurement collector power supply, an RMU/electromagnetic lock DSN power supply, or a quick-break relay power supply.

As mentioned above, since the string-type power conversion units cooperating with the transformer and the high-voltage cabinet are connected to the direct-current side of the battery system, the boost and conversion compartment has power grid adaptability, and can be applied to the immersion liquid-cooled energy storage system to significantly improve efficiency and system availability of the primary system of the immersion liquid-cooled energy storage system, thereby implementing free circulating current.

In an embodiment, the present disclosure further provides an immersion liquid-cooled energy storage system. The immersion liquid-cooled energy storage system includes a liquid-cooled battery compartment, and the boost and conversion compartment as described above. The boost and conversion compartment is connected to the liquid-cooled battery compartment. The liquid-cooled battery compartment includes a battery system, a first combiner box and a second combiner box. The battery system includes a liquid-cooled battery cabinet housing a plurality of battery clusters immersed in a cooling fluid. The direct-current side of the battery system is connected to the power conversion system of the boost and conversion compartment through the first combiner box and the second combiner box.

In an embodiment, the battery cluster may include a plurality of battery modules, and the battery module includes a plurality of battery cells grouped in a cluster.

In an embodiment, the liquid-cooled battery compartment further includes a battery management system communicating with the power conversion system. The battery management system is configured to acquire state information on the plurality of battery clusters and transmit the state information to the power conversion system.

In the description of the specification, the description with reference to the terms "some embodiments", "other embodiments", etc. means that the specific features, structures, materials or characteristics described in conjunction with the embodiment or example are included in at least one embodiment or example of the present disclosure. In the specification, the schematic description of the above terms does not necessarily refer to the same embodiment or example.

The examples and illustrations included herein show, by way of illustration and not of limitation, specific embodiments in which the subject matter may be practiced. As mentioned, other embodiments may be utilized and derived there from, such that structural and logical substitutions and changes may be made without departing from the scope of this disclosure. Although specific embodiments have been illustrated and described herein, any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A boost and conversion compartment, applied to an immersion liquid-cooled energy storage system and serving as a primary system of the immersion liquid-cooled energy storage system, the immersion liquid-cooled energy storage system including a liquid-cooled battery compartment connected to the boost and conversion compartment, the liquid-cooled battery compartment including a battery system, a first combiner box, and a second combiner box, the battery system including a liquid-cooled battery cabinet housing a plurality of battery clusters (500) immersed in a cooling fluid, the boost and conversion compartment comprising:
a high-voltage cabinet provided with a vacuum circuit breaker for connecting a power cable;
a transformer connected to the vacuum circuit breaker;
a power conversion system, PCS, including a plurality of string-type power conversion units including a first string-type power conversion unit and a second string-type power conversion unit, the first string-type power conversion unit having a first end connected to the transformer through a first alternating-current circuit breaker, and a second end connected to a direct-current side of the battery system through the first combiner box, the second string-type power conversion unit having a first end connected to the transformer through a second alternating-current circuit breaker, and a second end connected to the direct-current side of the battery system through the second combiner box, the second end of the first string-type power conversion unit being connected to one of the plurality of battery clusters (500), and the second end of the second string-type power conversion unit being connected to another of the plurality of battery clusters (500); and
a PCS group control unit connected to the PCS, and configured to acquire a control instruction and/or state information on the plurality of battery clusters (500), and control the plurality of string-type power conversion units to charge or discharge the plurality of battery clusters (500) based on the control instruction and/or the state information.

2. The boost and conversion compartment of claim 1, wherein each of the plurality of string-type power conversion units includes a plurality of power conversion modules (300), each power conversion module (300) including an alternating-current molded case circuit breaker (302), a power conversion device (304) and a direct-current molded case circuit breaker (306) connected in sequence;
the alternating-current molded case circuit breaker (302) of each of the plurality of power conversion modules (300) of the first string-type power conversion unit is connected to the first alternating-current circuit breaker, and the direct-current molded case circuit breaker (306) of each of the plurality of power conversion modules (300) of the first string-type power conversion unit is connected to the first combiner box; and
the alternating-current molded case circuit breaker (302) of each of the plurality of power conversion modules (300) of the second string-type power conversion unit is connected to the second alternating-current circuit breaker, and the direct-current molded case circuit breaker (306) of each of the plurality of power conversion modules (300) of the second string-type power conversion unit is connected to the second combiner box.

3. The boost and conversion compartment of claim 2, wherein the power conversion device (304) includes an alternating-current filter, a bidirectional DC/AC converter and a direct-current filter connected in sequence; and
wherein the alternating-current filter is connected to the alternating-current molded case circuit breaker (302), and the direct-current filter is connected to the direct-current molded case circuit breaker (306).

4. The boost and conversion compartment of claim 3, wherein the alternating-current filter is an alternating-current electromagnetic interference filter, and the direct-current filter is a direct-current electromagnetic interference filter.

5. The boost and conversion compartment of claim 3 or 4, wherein the power conversion device (304) further includes an alternating-current surge protection device, an alternating-current relay unit, an LCL filter, a direct-current contactor, a soft start circuit, and a direct-current surge protection device;
wherein an end of the alternating-current surge protection device is connected between the alternating-current filter and the alternating-current molded case circuit breaker (302), and another end of the alternating-current surge protection device is grounded;
wherein an end of the alternating-current relay unit is connected to the alternating-current filter, and another end of the alternating-current relay unit is connected to the bidirectional DC/AC converter through the LCL filter;
wherein the soft start circuit is connected in parallel with the direct-current contactor between a first end of the direct-current contactor and a second end of the direct-current contactor, the first end of the direct-current contactor is connected to the bidirectional DC/AC converter, and the second end of the direct-current contactor is connected to the direct-current filter; and
wherein an end of the direct-current surge protection device is connected between the direct-current filter and the direct-current molded case circuit breaker (306), and another end of the direct-current surge protection device is grounded.

6. The boost and conversion compartment of any one of claims 2 to 5, wherein the first combiner box includes a plurality of first high-voltage boxes (400), each of the plurality of first high-voltage boxes (400) being connected to the direct-current molded case circuit breaker (306) in one of the plurality of power conversion modules (300) of the first string-type power conversion unit in a one-to-one correspondence; and
wherein the second combiner box includes a plurality of second high-voltage boxes (400), each of the plurality of second high-voltage boxes (400) being connected to the direct-current molded case circuit breaker (306) in one of the plurality of power conversion modules (300) of the second string-type power conversion unit in a one-to-one correspondence.

7. The boost and conversion compartment of any one of claims 1 to 6, wherein the vacuum circuit breaker is a combined vacuum circuit breaker.

8. The boost and conversion compartment of any one of claims 1 to 7, further comprising three high-voltage current transformers (108a, 108b), wherein two (108a) of the three high-voltage current transformers are connected between the vacuum circuit breaker and the transformer, and the transformer is connected to the first alternating-current circuit breaker and the second alternating-current circuit breaker through the remaining one (108b) of the three high-voltage current transformers.

9. The boost and conversion compartment of any one of claims 1 to 8, further comprising an energy management unit configured to manage an auxiliary power system for the immersion liquid-cooled energy storage system,
wherein an end of the energy management unit is connected to the transformer, and another end of the energy management unit is connected to a device power supply; and
wherein the device power supply includes at least a power supply for the string-type power conversion unit.

10. The boost and conversion compartment of claim 9, wherein the energy management unit includes a fused disconnect switch, an isolation transformer, a relay, and a circuit breaker assembly connected in sequence; and
wherein the fused disconnect switch is connected to the transformer, and the circuit breaker assembly is connected to the device power supply.

11. The boost and conversion compartment of any one of claims 1 to 10, wherein the boost and conversion compartment further includes lightning arresters (106, 110a, 110b) respectively connected to the combined vacuum circuit breaker, the first alternating-current circuit breaker, and the second alternating-current circuit breaker.

12. The boost and conversion compartment of any one of claims 1 to 11, wherein the transformer is an insulated stereo roll iron core transformer.

13. An immersion liquid-cooled energy storage system, comprising:
a liquid-cooled battery compartment including a battery system, a first combiner box and a second combiner box, the battery system including a liquid-cooled battery cabinet housing a plurality of battery clusters (500) immersed in a cooling fluid; and
the boost and conversion compartment of any one of claims 1 to 12, wherein the power conversion system of the boost and conversion compartment is connected to a direct-current side of the battery system through the first combiner box and the second combiner box.

14. The immersion liquid-cooled energy storage system of claim 13, wherein each of the plurality of battery clusters (500) includes a plurality of battery modules, and the battery module includes a plurality of battery cells grouped in a cluster.

15. The immersion liquid-cooled energy storage system of claim 13 or 14, wherein the liquid-cooled battery compartment further includes a battery management system communicating with the power conversion system, the battery management system being configured to acquire state information on the plurality of battery clusters (500) and transmit the state information to the power conversion system.
